# EUROPEAN PATENT APPLICATION

(11) **EP 2 835 712 A1**
(43) Date of publication of application: **11.02.2015**
(21) Application number: 13880363.0
(22) Date of filing: 25.09.2013
(51) Int. Cl.: G06F 1/16, G06F 13/16

(54) **WIRELESS EXTENSION CARD AND METHOD FOR DATA STORAGE**

(30) Priority: 26.03.2013 CN 201310101231
(71) Applicant: Huawei Technologies Co., Ltd., Shenzhen, Guangdong 518129 (CN)
(72) Inventor: YUAN, Qin, Shenzhen Guangdong 518129 (CN); LU, Haizhao, Shenzhen Guangdong 518129 (CN)
(74) Representative: Epping - Hermann - Fischer
(86) International application number: PCT/CN2013/084208
(87) International publication number: WO 2014/153933

(57) **Abstract**

Embodiments of the present invention provide a wireless expansion card and a method for data storage. The wireless expansion card includes: a contact power receiving module, configured to: in a first time period, receive contact power supply of a first contact user equipment, so as to obtain first electric power; a contact communications module, electrically connected to the contact power receiving module, and configured to: in the first time period, use the first electric power to perform first contact communication with the first contact user equipment, so as to transmit a first read/write instruction and first data that needs to be read or written according to the first read/write instruction; and a wireless communications module, electrically connected to the contact power receiving module, in communication connection with the contact communications module, and configured to: in the first time period, use the first electric power, to perform first wireless communication with a first wireless peripheral device by using ultra-wideband impulse radio, so as to transmit the first read/write instruction and the first data, so that data storing is performed between the first contact user equipment and the first contact user equipment.

## Description

### CROSS-REFERENCE TO RELATED APPLICATIONS

This application claims priority to Chinese Patent Application No. 201310101231.7, filed with the Chinese Patent Office on March 26, 2013 and entitled "WIRELESS EXPANSION CARD AND METHOD FOR DATA STORAGE", which is incorporated herein by reference in its entirety.

### TECHNICAL FIELD

The present invention relates to the field of communications, and in particular, to a wireless expansion card and a method for data storage by using the wireless expansion card.

### BACKGROUND

Along with the popularization of intelligent terminals (such as a smart phone and a tablet computer), data often needs to be transmitted between an intelligent terminal and a memory card (which may be installed in the intelligent terminal) or between intelligent terminals.

In a known existing technique, an intelligent terminal (hereinafter referred to as a conventional terminal for ease of distinguishing) reads data from or writes data into a memory card (hereinafter referred to as a conventional memory card for ease of understanding and distinguishing) by using a contact interface, for example, a universal serial bus (USB, Universal Serial BUS) interface.

In order to improve transmission speed and user experience, a technology of implementing wireless transmission between an intelligent terminal and a memory card (or another intelligent terminal) by using ultra-wideband impulse radio is proposed. That is, by setting a transmission module, a wireless power supply module, and a wireless powered module, which are used to transmit data by using ultra-wideband impulse radio, in an intelligent terminal (hereinafter referred to as a novel intelligent terminal for ease of understanding and distinguishing) and a memory card (hereinafter referred to as a novel memory card for ease of understanding and distinguishing), wireless power supply and high-speed wireless reading/writing by the novel terminal for the novel memory card can be implemented. The novel memory card for wireless communications is referred to as a major future development direction of memory cards because of simple and rapid reading/writing operations. However, the conventional intelligent terminal cannot read data from and write data into the novel memory card in the same wireless manner, and cannot implement data transmission with the novel intelligent terminal by using ultra-wideband impulse radio, which severely affects user experience of the conventional intelligent terminal.

### SUMMARY

Embodiments of the present invention provide a wireless expansion card and a method for data storage, which are capable of improving user experience.

In a first aspect, a wireless expansion card is provided, where the wireless expansion card includes: a contact power receiving module, configured to: in a first time period, receive contact power supply of a first contact user equipment, so as to obtain first electric power; a contact communications module, electrically connected to the contact power receiving module, and configured to: in the first time period, use the first electric power to perform first contact communication with the first contact user equipment, so as to transmit a first read/write instruction and first data that needs to be read or written according to the first read/write instruction; and a wireless communications module, electrically connected to the contact power receiving module, in communication connection with the contact communications module, and configured to: in the first time period, use the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

With reference to the first aspect, in a first implementation manner of the first aspect, the first data is data that needs to be read from or written into the first wireless peripheral device by the first contact user equipment, and the contact communications module is specifically configured to receive the first read/write instruction sent by the first contact user equipment, and transmit the first data read/write instruction to the wireless communications module; and the wireless communications module is specifically configured to obtain the first data read/write instruction from the contact communications module, and send the first data read/write instruction to the first wireless peripheral device.

With reference to the first aspect and the above implementation manner, in a second implementation manner of the first aspect, the wireless expansion card further includes: a wireless power supply module, electrically connected to the contact power receiving module, and configured to: in the first time period, use the first electric power to provide wireless power supply for the first wireless peripheral device.

With reference to the first aspect and the above implementation manners, in a third implementation manner of the first aspect, the first data is data that needs to be read from or written into the first contact user equipment by the first wireless peripheral device, and the wireless communications module is specifically configured to receive the first read/write instruction sent by the first wireless peripheral device, and transmit the first data read/write instruction to the contact communications module; and the contact communications module is specifically configured to obtain the first read/write instruction from the wireless communications module, and send the first data read/write instruction to the first contact user equipment.

With reference to the first aspect and the above implementation manners, in a fourth implementation manner of the first aspect, the wireless expansion card further includes: a storage control module having a storage medium, electrically connected to the contact power receiving module, in communication connection with the contact communications module and the wireless communications module, and configured to read data from or write data into the storage medium.

With reference to the first aspect and the above implementation manners, in a fifth implementation manner of the first aspect, the contact power receiving module is further configured to: in a second time period, receive contact power supply of a second contact user equipment, so as to obtain second electric power; the wireless communications module is further configured to: in the second time period, use the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and the storage control module is specifically configured to: in the second time period, use the second electric power, to read the second data from or write the second data into the storage medium according to the second read/write instruction.

With reference to the first aspect and the above implementation manners, in a sixth implementation manner of the first aspect, the storage control module is further configured to: when a third read/write instruction from a peripheral device other than the second wireless peripheral device is received before data reading/writing corresponding to the second read/write instruction is completed, perform data reading/writing according to the third read/write instruction after the data reading/writing corresponding to the second read/write instruction is completed; or suspend the data reading/writing corresponding to the second read/write instruction, and after data reading/writing corresponding to the third read/write instruction is completed, continue the data reading/writing corresponding to the second read/write instruction; or cancel the data reading/writing corresponding to the second read/write instruction, and perform data reading/writing according to the third read/write instruction; or send a first operation indication request to the second wireless peripheral device, receive a first operation indication response sent by the second wireless peripheral device, and perform data reading/writing according to the first operation indication response.

With reference to the first aspect and the above implementation manners, in a seventh implementation manner of the first aspect, the wireless expansion card further includes: a wireless powered module, electrically connected to the wireless communications module and the storage control module, and configured to: in a third time period, receive wireless power supply of a third wireless peripheral device, so as to obtain third electric power; and the wireless communications module is further configured to: in the third time period, use the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and the storage control module is specifically configured to: in the third time period, use the third electric power, to read the third data from or write the third data into the storage medium according to the fourth read/write instruction.

With reference to the first aspect and the above implementation manners, in an eighth implementation manner of the first aspect, the storage control module is further configured to: when a fifth read/write instruction from a peripheral device other than the third wireless peripheral device is received before data reading/writing corresponding to the fourth read/write instruction is completed, perform data reading/writing according to the fifth read/write instruction after the data reading/writing corresponding to the fourth read/write instruction is completed; or suspend the data reading/writing corresponding to the fourth read/write instruction, and after data reading/writing corresponding to the fifth read/write instruction is completed, continue the data reading/writing corresponding to the fourth read/write instruction; or cancel the data reading/writing corresponding to the fourth read/write instruction, and perform data reading/writing according to the fifth read/write instruction; or send a second operation indication request to the third wireless peripheral device, receive a second operation indication response sent by the third wireless peripheral device, and perform data reading/writing according to the second operation indication response.

With reference to the first aspect and the above implementation manners, in a ninth implementation manner of the first aspect, the contact power receiving module is further configured to: in a fourth time period, receive contact power supply of a third contact user equipment, so as to obtain fourth electric power; the contact communications module is further configured to: in the fourth time period, use the fourth electric power to perform second contact communication with the third contact peripheral device, so as to transmit a sixth read/write instruction that is from the third contact peripheral device and fourth data that needs to be read or written according to the sixth read/write instruction; and the storage control module is specifically configured to: in the fourth time period, use the fourth electric power, to read the fourth data from or write the fourth data into the storage medium according to the sixth read/write instruction.

With reference to the first aspect and the above implementation manners, in a tenth implementation manner of the first aspect, the storage control module is further configured to: when a seventh read/write instruction from a peripheral device other than the third contact user equipment is received before data reading/writing corresponding to the sixth read/write instruction is completed, perform data reading/writing according to the seventh read/write instruction after the data reading/writing corresponding to the sixth read/write instruction is completed; or suspend the data reading/writing corresponding to the sixth read/write instruction, and after data reading/writing corresponding to the seventh read/write instruction is completed, continue the data reading/writing corresponding to the sixth read/write instruction; or cancel the data reading/writing corresponding to the sixth read/write instruction, and perform data reading/writing according to the seventh read/write instruction; or send a third operation indication request to the third contact peripheral device, receive a third operation indication response sent by the third contact peripheral device, and perform data reading/writing according to the third operation indication response.

With reference to the first aspect and the above implementation manners, in an eleventh implementation manner of the first aspect, the contact power receiving module and the contact communications module can be connected to the contact user equipment through at least one interface, and the at least one interface includes: a secure digital SD card interface, a compact flash CF card interface, a multimedia card MMC interface, a universal serial bus USB interface, a 1394 interface, a subscriber identity module SIM card interface, a user identity module UIM card interface, and a universal subscriber identity USIM card interface.

In a second aspect, a method for data storage is provided, and the method includes: in a first time period, receiving contact power supply of a first contact user equipment, so as to obtain first electric power; in the first time period, using the first electric power to perform first contact communication with the first contact user equipment, so as to transmit a first read/write instruction and first data that needs to be read or written according to the first read/write instruction; and in the first time period, using the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

With reference to the second aspect, in a first implementation manner of the second aspect, the first data is data that needs to be read from or written into the first wireless peripheral device by the first contact user equipment, and the performing first contact communication with the first contact user equipment includes: receiving the first read/write instruction sent by the first contact user equipment; and the performing first wireless communication with a first wireless peripheral device includes: sending the first data read/write instruction to the first wireless peripheral device.

With reference to the second aspect and the above implementation manner, in a second implementation manner of the second aspect, before the performing first wireless communication with a first wireless peripheral device, the method further includes: in the first time period, using the first electric power to provide wireless power supply for the first wireless peripheral device.

With reference to the second aspect and the above implementation manners, in a third implementation manner of the second aspect, the first data is data that needs to be read from or written into the first contact user equipment by the first wireless peripheral device, and the performing first wireless communication with a first wireless peripheral device includes: receiving the first read/write instruction sent by the first wireless peripheral device; and the performing first contact communication with the first contact user equipment includes: sending the first data read/write instruction to the first contact user equipment.

With reference to the second aspect and the above implementation manners, in a fourth implementation manner of the second aspect, the method further includes: in a second time period, receiving contact power supply of a second contact user equipment, so as to obtain second electric power; in the second time period, using the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and in the second time period, using the second electric power, to read the second data from or write the second data into a storage medium according to the second read/write instruction.

With reference to the second aspect and the above implementation manners, in a fifth implementation manner of the second aspect, if a third read/write instruction from a peripheral device other than the second wireless peripheral device is received before data reading/writing corresponding to the second read/write instruction is completed, the reading the second data from or writing the second data into a storage medium according to the second read/write instruction includes: performing data reading/writing according to the third read/write instruction after the data reading/writing corresponding to the second read/write instruction is completed; or suspending the data reading/writing corresponding to the second read/write instruction, and after data reading/writing corresponding to the third read/write instruction is completed, continuing the data reading/writing corresponding to the second read/write instruction; or canceling the data reading/writing corresponding to the second read/write instruction, and performing data reading/writing according to the third read/write instruction; or sending a first operation indication request to the second wireless peripheral device, receiving a first operation indication response sent by the second wireless peripheral device, and performing data reading/writing according to the first operation indication response.

With reference to the second aspect and the above implementation manners, in a sixth implementation manner of the second aspect, the method further includes: in a third time period, receiving wireless power supply of a third wireless peripheral device, so as to obtain third electric power; in the third time period, using the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and in the third time period, using the third electric power, to read the third data from or write the third data into the storage medium according to the fourth read/write instruction.

With reference to the second aspect and the above implementation manners, in a seventh implementation manner of the second aspect, if a fifth read/write instruction from a peripheral device other than the third wireless peripheral device is received before data reading/writing corresponding to the fourth read/write instruction is completed, the reading the third data from or writing the third data into the storage medium according to the fourth read/write instruction includes: performing data reading/writing according to the fifth read/write instruction after the data reading/writing corresponding to the fourth read/write instruction is completed; or suspending the data reading/writing corresponding to the fourth read/write instruction, and after data reading/writing corresponding to the fifth read/write instruction is completed, continuing the data reading/writing corresponding to the fourth read/write instruction; or canceling the data reading/writing corresponding to the fourth read/write instruction, and performing data reading/writing according to the fifth read/write instruction; or sending a second operation indication request to the third wireless peripheral device, receiving a second operation indication response sent by the third wireless peripheral device, and performing data reading/writing according to the second operation indication response.

With reference to the second aspect and the above implementation manners, in an eighth implementation manner of the second aspect, the method further includes: in a fourth time period, receiving contact power supply of a third contact user equipment, so as to obtain fourth electric power; in the fourth time period, using the fourth electric power to perform second contact communication with the third contact peripheral device, so as to transmit a sixth read/write instruction that is from the third contact peripheral device and fourth data that needs to be read or written according to the sixth read/write instruction; and in the fourth time period, using the fourth electric power, to read the fourth data from or write the fourth data into the storage medium according to the sixth read/write instruction.

With reference to the second aspect and the above implementation manners, in a ninth implementation manner of the second aspect, if a seventh read/write instruction from a peripheral device other than the third contact user equipment is received before data reading/writing corresponding to the sixth read/write instruction is completed, the reading the fourth data from or writing the fourth data into the storage medium according to the sixth read/write instruction includes: performing data reading/writing according to the seventh read/write instruction after the data reading/writing corresponding to the sixth read/write instruction is completed; or suspending the data reading/writing corresponding to the sixth read/write instruction, and after data reading/writing corresponding to the seventh read/write instruction is completed, continuing the data reading/writing corresponding to the sixth read/write instruction; or canceling the data reading/writing corresponding to the sixth read/write instruction, and performing data reading/writing according to the seventh read/write instruction; or sending a third operation indication request to the third contact peripheral device, receiving a third operation indication response sent by the third contact peripheral device, and performing data reading/writing according to the third operation indication response.

According to the wireless expansion card and the method for data storage in the embodiments of the present invention, because the wireless expansion card has a wireless communications module and a contact communications module, the wireless expansion card performs contact communication with a conventional intelligent terminal by using the contact communications module, communicates, by using the wireless communications module, with a novel intelligent terminal or a novel memory card that reads/writes data by using ultra-wideband impulse radio, and performs conversion between different protocols on data and signaling between the wireless communications module and the contact communications module, the wireless expansion card can implement data reading/writing between the conventional intelligent terminal and the novel intelligent terminal or novel memory card, so that an application range of the novel intelligent terminal or the novel memory card can be expanded, promotion and popularization of the ultra-wideband impulse radio transmission technology can be accelerated, and user experience of the conventional intelligent terminal can be improved.

### BRIEF DESCRIPTION OF DRAWINGS

To describe the technical solutions in the embodiments of the present invention more clearly, the following briefly introduces accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic block diagram of a wireless expansion card according to an embodiment of the present invention;
FIG. 2 is a schematic block diagram of a wireless expansion card according to another embodiment of the present invention;
FIG. 3 is a schematic block diagram of a wireless expansion card according to still another embodiment of the present invention; and
FIG. 4 is a schematic flowchart of a method for data storage according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

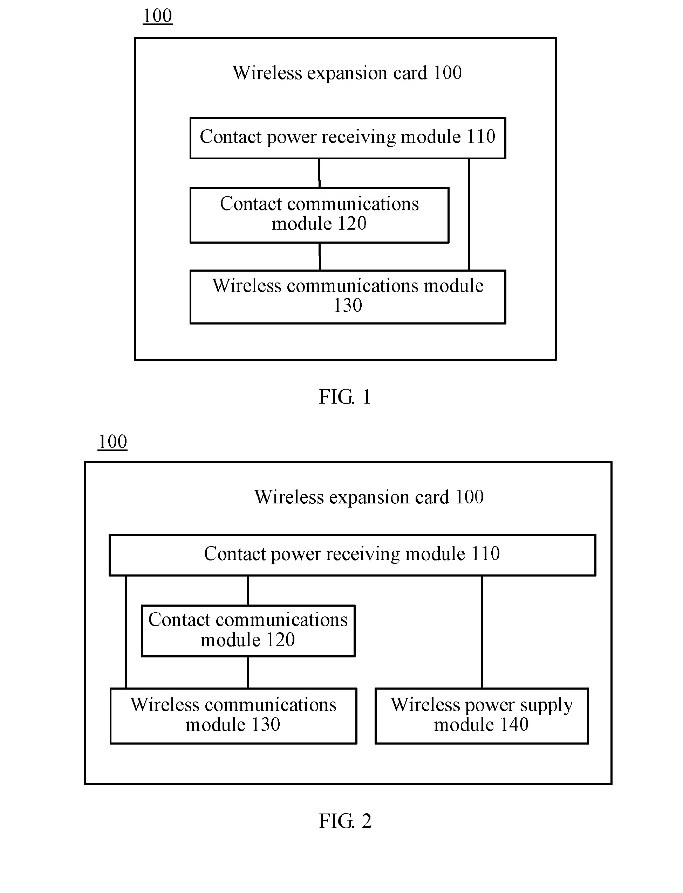

FIG. 1 is a schematic block diagram of a wireless expansion card 100 according to an embodiment of the present invention, and as shown in FIG. 1, the wireless expansion card 100 includes:
a contact power receiving module 110, configured to: in a first time period, receive contact power supply of a first contact user equipment, so as to obtain first electric power;
a contact communications module 120, electrically connected to the contact power receiving module 110, and configured to: in the first time period, use the first electric power to perform first contact communication with the first contact user equipment, so as to transmit a first read/write instruction and first data that needs to be read or written according to the first read/write instruction; and
a wireless communications module 130, electrically connected to the contact power receiving module 110, in communication connection with the contact communications module 120, and configured to: in the first time period, use the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

Functions of the modules in the embodiment of the present invention are described first in the following.

In the embodiment of the present invention, the contact power receiving module 110 may be electrically connected to a peripheral device through a contact interface, so as to receive contact power supply of the peripheral device (for example, the first contact user equipment) to obtain electric power, and in the embodiment of the present invention, a method and a process of obtaining electric power by using a contact interface may be similar to the prior art, and descriptions thereof are omitted here to avoid unnecessary details.

It should be noted that, the shape and size of the contact power receiving module 110 according to the embodiment of the present invention may be configured randomly as required, as long as contact power supply of a peripheral device can be received and power can be supplied to another module in the wireless expansion card, which is not specifically limited in the present invention.

Similarly, the contact communications module 120 may be in communication connection with a peripheral device through a contact interface, and therefore can transmit information with the peripheral device (for example, the first contact user equipment); in the embodiment of the present invention, a method and a process of transmitting information by using a contact interface may be similar to the prior art, and descriptions thereof are omitted here to avoid unnecessary details.

Moreover, in the embodiment of the present invention, the contact communications module 120 is in communication connection with the wireless communications module 130, so as to implement conversion between an information form (such as an encoding and decoding manner, and a carrying manner) for contact communication and an information form for wireless communication (specifically, wireless communication using ultra-wideband impulse radio), which is described in detail subsequently.

It should be noted that, the shape and size of the contact communications module 120 according to the embodiment of the present invention may be configured randomly as required, as long as contact communication with the peripheral device and the foregoing form conversion can be implemented, which is not specifically limited in the present invention.

Optionally, in the embodiment of the present invention, the contact power receiving module and the contact communications module can be connected to the contact user equipment through at least one interface, and the at least one interface includes:
a secure digital SD card interface, a compact flash CF card interface, a multimedia card MMC interface, a universal serial bus USB interface, a 1394 interface, a subscriber identity module SIM card interface, a user identity module UIM card interface, and a universal subscriber identity USIM card interface.

Specifically, in the embodiment of the present invention, the contact power receiving module 120 can be electrically connected to the peripheral device through various physical interfaces, such as a user identity module (UIM, User Identity Module) card interface, a universal subscriber identity (USIM, Universal Subscriber Identity Module) card interface, a secure digital card (SD, Secure Digital Memory Card) interface, a compact flash (CF, Compact Flash) card interface, a multimedia card (MMC, Multimedia Card) interface, a subscriber identity module (SIM, Subscriber Identity Module) card interface, and a universal serial bus (USB, Universal Serial BUS) interface, and obtain electric power from the peripheral device.

Likewise, after being powered on (specifically, after receiving the power supply of the contact power receiving module 110), the contact communications module 120 can be in communication connection with the peripheral device through one or more interfaces in the foregoing interfaces, so as to perform data and signaling transmission with the peripheral device.

In the embodiment of the present invention, after being powered on (for example, after receiving the power supply of the contact power receiving module 110), the wireless communications module 130 can transmit data by using an ultra-wideband impulse radio (UWB, Ultra-Wideband) communication technology. UWB wireless communication is a method for performing communication without using a carrier but adopting pulses having extremely small time intervals (less than 1 ns), and the UWB wireless communication is also referred to as impulse radio (Impulse Radio), time domain (Time Domain) or carrier free (Carrier Free) communication. The UWB wireless communication does not perform carrier modulation by using a cosine wave, as compared with waveform of a common binary phase shift keying signal, but sends many pulses less than 1 ns, and therefore, this communication manner occupies quite wide bandwidth, and because power density of the frequency spectrum is rather small, the communication manner has a feature of common spread spectrum communication. The UWB wireless communication transmits data by using a nanosecond or even picosecond non-sinusoidal narrow pulse. By transmitting a signal with extremely low power on a wide spectrum, the UWB can implement a data transmission rate of hundreds of Mbit/s to several Gbit/s in a range of about 10 meters. The UWB has many advantages such as strong anti-interference performance, a high transmission rate, extremely high bandwidth, small power consumption, and small sending power.

Moreover, in the embodiment of the present invention, the wireless communications module 130 is in communication connection with the contact communications module 120, so as to implement conversion between an information form (such as an encoding and decoding manner, and a carrying manner) for contact communication and an information form for wireless communication (specifically, wireless communication using ultra-wideband impulse radio), which is described in detail subsequently.

It should be noted that, the shape and size of the wireless communications module 130 according to the embodiment of the present invention may be configured randomly as required, as long as the UWB wireless communication and the foregoing form conversion can be implemented, which is not specifically limited in the present invention.

In the following, a method and a process in which a conventional user equipment A (an example of the first contact user equipment) incapable of performing wireless communication by using ultra-wideband impulse radio reads data from or writes data into a peripheral device B (an example of the first wireless peripheral device) capable of performing wireless communication by using ultra-wideband impulse radio are described in the following.

Optionally, the first data is data that needs to be read from or written into the first wireless peripheral device by the first contact user equipment, and
the contact communications module is specifically configured to receive the first read/write instruction sent by the first contact user equipment, and transmit the first data read/write instruction to the wireless communications module; and
the wireless communications module is specifically configured to obtain the first data read/write instruction from the contact communications module, and send the first data read/write instruction to the first wireless peripheral device.

Specifically, in the embodiment of the present invention, when the user equipment A needs to read data from or write data into the peripheral device B through UWB wireless communication (an example of the first time period), power is supplied to the wireless expansion card 100 (specifically, to the contact power receiving module 110) through a contact interface and a read/write instruction a (an example of the first read/write instruction) is transmitted to the wireless expansion card 100 through contact communication, for example, when the user equipment A needs to read data from the peripheral device B through UWB wireless communication, the user equipment A may transmit a data read instruction a to the wireless expansion card 100, and when the user equipment A needs to write data into the peripheral device B through UWB wireless communication, the user equipment A may transmit, to the wireless expansion card 100, a data write instruction a and data that needs to be written; in the following, for ease of understanding, descriptions are provided by using a process of reading data as an example. That is, the user equipment A may encapsulate (or, encode) the read/write instruction a according to a communication protocol corresponding to the contact communication interface.

Therefore, after receiving the power supply, the contact power receiving module 110 may supply electric power (an example of the first electric power) to the contact communications module 120 and the wireless communications module 130; the contact communications module 120 starts after being powered on, receives the read/write instruction a, and may decapsulate (or, decode) the read/write instruction a according to the communication protocol corresponding to the contact communication interface. Here, a process of decapsulating the read/write instruction and a process of decapsulating the data may be similar to the prior art, and descriptions thereof are omitted here to avoid unnecessary details.

Subsequently, because the contact communications module 120 is in communication connection with the wireless communications module 130, the contact communications module 120 can send the decapsulated read/write instruction a to the wireless communications module 130, the wireless communications module 130, after being powered on, can receive the decapsulated read/write instruction a, perform secondary encapsulation on the decapsulated read/write instruction a according to the UWB wireless communication protocol, and send the secondary-encapsulated read/write instruction to the peripheral device B. Here, a process of encapsulating the read/write instruction and a process of encapsulating the data may be similar to the prior art, and descriptions thereof are omitted here to avoid unnecessary details.

The peripheral device B, after receiving the read/write instruction a encapsulated according to the UWB wireless communication protocol, may perform decapsulation according to the UWB wireless communication protocol, so as to search a local memory for data X required by the user equipment A, and may also encapsulate the data X according to the UWB wireless communication protocol.

The wireless communications module 130 performs decapsulation according to the UWB wireless communication protocol so as to obtain the data X, and transmits the data X to the contact communications module 120. Here, a process of decapsulating the read/write instruction and a process of decapsulating the data may be similar to the prior art, and descriptions thereof are omitted here to avoid unnecessary details.

The contact communications module 120 may encapsulate the data X according to a transmission protocol corresponding to the contact communication interface, and transmit the encapsulated data X to the user equipment A. Here, a process of encapsulating the read/write instruction and a process of encapsulating the data may be similar to the prior art, and descriptions thereof are omitted here to avoid unnecessary details.

Therefore, the user equipment A may obtain the data X required to be read by the user equipment A.

The wireless expansion card further includes:
a wireless power supply module 140, electrically connected to the contact power receiving module 110, and configured to: in the first time period, use the first electric power to provide wireless power supply for the first wireless peripheral device.

Specifically, as shown in FIG. 2, the wireless expansion card 100 may further include the wireless power supply module 140, for example, when the peripheral device B is a wireless memory card having no power source, before a read/write instruction and data are transmitted, the wireless memory card may be powered by using the wireless power supply module 140, so as to complete data reading/writing.

In the embodiment of the present invention, the wireless power supply module 140 may implement power supply for the wireless memory card by using the wireless power supply technology, and in the wireless power supply technology, power supply (or, drive) may be performed in a nonradioactive wireless energy transmission manner, that is, energy carried by electromagnetic waves (for example, most electromagnetic waves spread in the space when a radio broadcast is emitted) in the space may be collected by using a nonradioactive field. The wireless power supply module 140 and the wireless memory card transfer energy (or, vibrate) by using the same inherent frequency. In the embodiment of the present invention, the wireless power supply module 140 may implement wireless power supply in various manners such as electric field coupling, magnetic field magnetic coupling, photoelectric coupling, and electromagnetic resonance.

Likewise, a subsequently described wireless powered module 160 may also receive, by using the wireless power supply technology the same as that of the wireless power supply module 140, electric power sent by the peripheral wireless device by using the wireless power supply module.

It should be noted that, the shape and size of the wireless power supply module 140 according to the embodiment of the present invention may be configured randomly as required, as long as the wireless power supply can be implemented, which is not specifically limited in the present invention.

The method and process for the user equipment A to read data from the peripheral device B are listed above; the method and process when the user equipment A needs to write data into the peripheral device B are similar, and descriptions thereof are omitted here to avoid unnecessary details.

A method and process for the peripheral device B, which is capable of performing wireless communication by using ultra-wideband impulse radio, to read data from or write data into the conventional user equipment A, which is incapable of performing wireless communication by using the ultra-wideband impulse radio, are described in the following.

Optionally, the first data is data that needs to be read from or written into the first contact user equipment by the first wireless peripheral device, and
the wireless communications module is specifically configured to receive the first read/write instruction sent by the first wireless peripheral device, and transmit the first data read/write instruction to the contact communications module; and
the contact communications module is specifically configured to obtain the first read/write instruction from the wireless communications module, and send the first data read/write instruction to the first contact user equipment.

Specifically, in the embodiment of the present invention, when the peripheral device B needs to read data from or write data into the user equipment A through UWB wireless communication (another example of the first time period), after the user equipment A supplies power to the wireless expansion card 100 (specifically, to the contact power receiving module 110) through a contact interface, the user equipment A may transmit a read/write instruction b (another example of the first read/write instruction) to the wireless expansion card 100 through UWB wireless communication, for example, when the peripheral device B needs to read data from the user equipment A, the peripheral device B may transmit a data read instruction b to the wireless expansion card 100, and when the peripheral device B needs to write data into the user equipment A, the peripheral device B may transmit, to the wireless expansion card 100, a data write instruction b and data Y that needs to be written; in the following, for ease of understanding, descriptions are provided by using a process of writing data as an example. That is, the peripheral device B may encapsulate (or, encode) the read/write instruction b and the data Y according to UWB wireless communication.

Therefore, after receiving the power supply, the contact power receiving module 110 may provide electric power (an example of the first electric power) to the contact communications module 120 and the wireless communications module 130, and the wireless communications module 130 starts after being powered on, and receives the read/write instruction b and the data Y. The wireless communications module 130 performs decapsulation according to the UWB wireless communication protocol so as to obtain the data Y, and transmits the data Y to the contact communications module 120. Here, a process of decapsulating the read/write instruction and a process of decapsulating the data may be similar to the prior art, and descriptions thereof are omitted here to avoid unnecessary details.

The contact communications module 120 starts after being powered on, and receives the read/write instruction b and the data Y, and moreover, the contact communications module 120 may encapsulate (or, encode) the read/write instruction b and the data Y according to the communication protocol corresponding to the contact communication interface, and transmit the encapsulated read/write instruction b and data Y to the user equipment A. Here, a process of encapsulating the read/write instruction and a process of encapsulating the data may be similar to the prior art, and descriptions thereof are omitted here to avoid unnecessary details.

Therefore, the user equipment A may obtain the data Y required to be written.

The method and process for the peripheral device B to write data into the user equipment A are listed above; the method and process when the peripheral device B needs to read data from the user equipment A are similar, and descriptions thereof are omitted here to avoid unnecessary details.

According to the wireless expansion card in the embodiment of the present invention, because the wireless expansion card has a wireless communications module and a contact communications module, the wireless expansion card performs contact communication with a conventional intelligent terminal by using the contact communications module, communicates, by using the wireless communications module, with a novel intelligent terminal or a novel memory card that reads/writes data by using ultra-wideband impulse radio, and performs conversion between different protocols on data and signaling between the wireless communications module and the contact communications module, the wireless expansion card can implement data reading/writing between the conventional intelligent terminal and the novel intelligent terminal or novel memory card, so that an application range of the novel intelligent terminal or the novel memory card can be expanded, promotion and popularization of the ultra-wideband impulse radio transmission technology can be accelerated, and user experience of the conventional intelligent terminal can be improved.

Optionally, the wireless expansion card further includes:
a storage control module 150 having a storage medium, electrically connected to the contact power receiving module 110, in communication connection with the contact communications module 120 and the wireless communications module 130, and configured to read data from or write data into the storage medium.

Specifically, in the embodiment of the present invention, the wireless expansion card 100 may further have a data storage function, that is, the wireless expansion card 100 may receive, by configuring the storage control module 150 having a storage medium, read/write instructions of the contact communications module 120 and the wireless communications module 130, and may perform a data read/write operation in the storage medium according to the read/write instruction. In the embodiment of the present invention, the method and process of reading/writing data according to the read/write instruction are similar to those in the prior art, and descriptions thereof are omitted here to avoid unnecessary details. In the embodiment of the present invention, the storage medium used to store data may be, for example, a mature storage medium in the art, such as a random access memory, a flash memory (Flash Memory), a read-only memory, a programmable read-only memory, an electrically erasable and programmable memory, a register, and a non-volatile random access memory (NVRAM), which is not specifically limited in the present invention.

The wireless expansion card 100 of the present invention may be installed in various intelligent terminals such as a mobile phone and a tablet computer. For example, the wireless expansion card 100 may be manufactured to have the same shape and size as those of a universal SIM card, a physical interface (including a power supply interface and a communication interface) between the contact power receiving module 110 and the contact communications module 120 may be manufactured to have the same structure and shape as those of a physical interface of an existing SIM, and other parts as well as the wireless communications module 130 and the storage control module 150 are integrated in a part, other than the physical interface, of the SIM. It should be understood that, the shape and the manufacturing method of the wireless expansion card 100 listed above are only exemplary descriptions, and the present invention is not limited thereto; other memories having the structure and functions of the wireless expansion card 100 of the present invention all fall within the protection scope of the present invention, for example, the wireless expansion card 100 of the present invention may further be applied to manufacturing of a UIM card, a USIM card, an SD card, a CF card, and an MMC card.

For another example, the wireless expansion card 100 of the present invention may be used independently, and the physical interface between the contact power receiving module 110 and the contact communications module 120 in the wireless expansion card 100 of the present invention may be manufactured to have the same function, shape and size as those of, for example, a universal serial bus (USB, Universal Serial BUS) interface; therefore, the wireless expansion card 100 can be connected to an intelligent terminal device having a USB interface, such as a personal computer (PC, Personal Computer), through the USB interface, so as to implement contact data reading/writing.

Moreover, when the contact power receiving module 110 and the contact communications module 120 use, for example, the USB interface, as the physical interface for connection to the peripheral device, multiple USB interfaces may further be disposed, which is not specifically limited in the present invention.

It should be noted that, in the embodiment of the present invention, the wireless peripheral device refers to a peripheral device capable of performing the foregoing UWB wireless communication (that is, a novel intelligent terminal), and the contact peripheral device refers to a peripheral device capable of performing the contact communication (that is, the conventional intelligent terminal). Moreover, the wireless peripheral device may also have a function of contact communication, and likewise, the contact peripheral device may also have a function of the foregoing UWB wireless communication, which is not specifically limited in the present invention.

In addition, in the embodiment of the present invention, the storage control module 150 may control actions of the contact power receiving module 110, the contact communications module 120, the wireless communications module 130, and the wireless powered module 160 (a function of the module is described subsequently), that is, after the storage control module 150 is powered on, the storage control module 150 may control, according to a pre-stored program, actions such as enabling and disabling of the contact power receiving module 110, the contact communications module 120, the wireless communications module 130, and the wireless powered module 160.

Therefore, the storage control module 150 uniformly controls actions of the modules, and management or variation on the functions or a storage procedure of the whole memory card can be implemented by designing the storage control module 150, which facilitates design and management, improves practicability of the wireless expansion card 100 of the present invention, and is easy to implement.

Optionally, the contact power receiving module is further configured to: in a second time period, receive contact power supply of a second contact user equipment, so as to obtain second electric power;
the wireless communications module is further configured to: in the second time period, use the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and
the storage control module is specifically configured to: in the second time period, use the second electric power, to read the second data from or write the second data into the storage medium according to the second read/write instruction.

Specifically, in the embodiment of the present invention, the storage control module 150 may receive power supply of a user equipment C (an example of the second contact user equipment, that is, the conventional intelligent terminal equipped with the wireless expansion card of the present invention) in a certain time period (the second time period), and serve as a storage device for data reading/writing of a peripheral device D (an example of the second wireless peripheral device).

Optionally, the wireless expansion card further includes:
a wireless powered module, electrically connected to the wireless communications module and the storage control module, and configured to: in a third time period, receive wireless power supply of a third wireless peripheral device, so as to obtain third electric power; and
the wireless communications module is further configured to: in the third time period, use the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and
the storage control module is specifically configured to: in the third time period, use the third electric power, to read the third data from or write the third data into the storage medium according to the fourth read/write instruction.

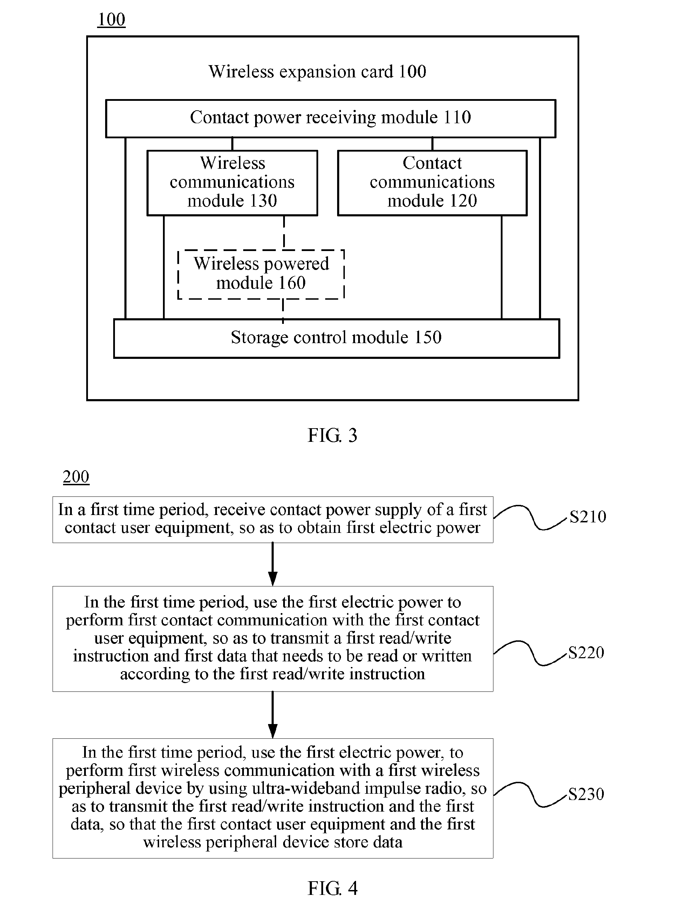

Specifically, as shown in a dashed portion of FIG. 3, in the embodiment of the present invention, the storage control module 150 may receive power supply of a peripheral device E (an example of the third wireless peripheral device) by using the wireless powered module 160 in a certain time period (the third time period), and serve as a storage device for data reading of the peripheral device E. Therefore, because the wireless powered module 160 is configured, for example, when a user equipment (for example, a user equipment F) connected to the wireless expansion card is turned off and therefore, the wireless communications module 130 and the storage control module 150 cannot obtain the power supply of the user equipment F, the power supply of the peripheral device E (a peripheral device capable of providing wireless power supply) requiring data storage can still be received by using the wireless powered module 160, thereby ensuring data storage and improving user experience of the wireless expansion card.

In the embodiment of the present invention, the wireless powered module 160 may receive the wireless power supply of a peripheral device (for example, the first wireless peripheral device or the second wireless peripheral device) by using the wireless power supply technology, and in the wireless power supply technology, power supply (or, drive) may be performed in a nonradioactive wireless energy transmission manner, that is, energy carried by electromagnetic waves (for example, most electromagnetic waves spread in the space when a radio broadcast is emitted) in the space may be collected by using a nonradioactive field. The wireless powered module 160 and the peripheral device transfer energy (or, vibrate) by using the same inherent frequency. In the embodiment of the present invention, the wireless powered module 160 may implement wireless power receiving in various manners such as electric field coupling, electromagnetic coupling, photoelectric coupling, and electromagnetic resonance.

It should be noted that, the shape and size of the wireless powered module 160 according to the embodiment of the present invention may be configured randomly as required, as long as the wireless power receiving can be implemented, which is not specifically limited in the present invention.

Here, it should be noted that, in the foregoing situation, if the user equipment F is started and supplies power to the storage control module and the wireless communications module, the storage control module and the wireless communications module may switch the power source to the contact power receiving module.

Optionally, the contact power receiving module is further configured to: in a fourth time period, receive contact power supply of a third contact user equipment, so as to obtain fourth electric power;
the contact communications module is further configured to: in the fourth time period, use the fourth electric power to perform second contact communication with the third contact peripheral device, so as to transmit a sixth read/write instruction that is from the third contact peripheral device and fourth data that needs to be read or written according to the sixth read/write instruction; and
the storage control module is specifically configured to: in the fourth time period, use the fourth electric power, to read the fourth data from or write the fourth data into the storage medium according to the sixth read/write instruction.

Specifically, in the embodiment of the present invention, the storage control module 150 may receive power supply of a user equipment G (an example of the third contact user equipment, that is, the conventional intelligent terminal equipped with the wireless expansion card of the present invention) in a certain time period (the fourth time period), and serve as a storage device for data reading/writing of the user equipment G.

Optionally, the storage control module is further configured to: when a third read/write instruction from a peripheral device other than the second wireless peripheral device is received before data reading/writing corresponding to the second read/write instruction is completed,
perform data reading/writing according to the third read/write instruction after the data reading/writing corresponding to the second read/write instruction is completed; or
suspend the data reading/writing corresponding to the second read/write instruction, and after data reading/writing corresponding to the third read/write instruction is completed, continue the data reading/writing corresponding to the second read/write instruction; or
cancel the data reading/writing corresponding to the second read/write instruction, and perform data reading/writing according to the third read/write instruction; or
send a first operation indication request to the second wireless peripheral device, receive a first operation indication response sent by the second wireless peripheral device, and perform data reading/writing according to the first operation indication response.

Moreover, the storage control module is further configured to: when a fifth read/write instruction from a peripheral device other than the third wireless peripheral device is received before data reading/writing corresponding to the fourth read/write instruction is completed,
perform data reading/writing according to the fifth read/write instruction after the data reading/writing corresponding to the fourth read/write instruction is completed; or
suspend the data reading/writing corresponding to the fourth read/write instruction, and after data reading/writing corresponding to the fifth read/write instruction is completed, continue the data reading/writing corresponding to the fourth read/write instruction; or
cancel the data reading/writing corresponding to the fourth read/write instruction, and perform data reading/writing according to the fifth read/write instruction; or
send a second operation indication request to the third wireless peripheral device, receive a second operation indication response sent by the third wireless peripheral device, and perform data reading/writing according to the second operation indication response.

Moreover, the storage control module is further configured to: when a seventh read/write instruction from a peripheral device other than the third contact user equipment is received before data reading/writing corresponding to the sixth read/write instruction is completed,
perform data reading/writing according to the seventh read/write instruction after the data reading/writing corresponding to the sixth read/write instruction is completed; or
suspend the data reading/writing corresponding to the sixth read/write instruction, and after data reading/writing corresponding to the seventh read/write instruction is completed, continue the data reading/writing corresponding to the sixth read/write instruction; or
cancel the data reading/writing corresponding to the sixth read/write instruction, and perform data reading/writing according to the seventh read/write instruction; or
send a third operation indication request to the third contact peripheral device, receive a third operation indication response sent by the third contact peripheral device, and perform data reading/writing according to the third operation indication response.

Specifically, in the embodiment of the present invention, for example, if the storage control module detects that the power source comes from the wireless powered module, it can be determined that a wireless peripheral device H (different from a device equipped with the wireless expansion 100 of the present invention) needs to read/write data, so as to inhibit an action of the contact communications module, and therefore, in the process of performing data reading/writing on the peripheral device H, data reading/writing on a peripheral device I (for example, a device equipped with the wireless expansion 100 of the present invention) other than the peripheral device H is not performed, thereby avoiding a read/write error caused by simultaneous data reading/writing of multiple peripheral devices, and further improving the reliability of the wireless expansion 100 of the present invention.

Alternatively, in the embodiment of the present invention, if the storage control module, when performing a data read/write operation on a device J according to a read/write instruction from the device J (a wireless peripheral device or a contact peripheral device), receives (by using the wireless communications module or the contact communications module) a read/write instruction d of a peripheral device K (a wireless peripheral device or a contact peripheral device),
for example, the storage control module may continue performing the data read/write operation on the device J, and after the data read/write operation is completed, the storage control module performs a data read/write operation according to the read/write instruction d, for example, it may be detected whether power supply of the device K can be received, if the power supply of the device K is not detected, it is not required to perform the data read/write operation according to the read/write instruction d; for another example, query information may further be sent to the device K (by using the wireless communications module or the contact communications module), so as to notify the device K that the data reading/writing may be performed, and the operation is performed according to a response of the peripheral device K, for example, if a response is obtained, a data read/write operation is performed according to the read/write instruction d or a read/write instruction e sent again by the device K, and if no response is obtained within specified time, power supply may be cut off to cancel the data read/write operation.

Alternatively, the storage control module may suspend the data read/write operation on the device J and perform a data read/write operation according to the read/write instruction d immediately, and after the data read/write operation is completed, the storage control module continues to perform the data read/write operation on the device J, for example, it may be detected whether power supply of the device J can be received, if not detected, it is not required to perform the data read/write operation; for another example, query information may further be sent to the device J (by using the wireless communications module or the contact communications module), so as to notify the device J that the data reading/writing may be performed, and the operation is performed according to a response of the device J, for example, if a response is obtained, a data read/write operation is performed according to the read/write instruction c or a read/write instruction f sent again by the device J, and if no response is obtained within specified time, power supply may be cut off to cancel the data read/write operation.

Alternatively, the storage control module may cancel the data read/write operation for the device J, and perform the data read/write operation according to the read/write instruction d immediately.

Alternatively, the storage control module may send a query message (an operation indication request) to the device J, for example, the storage control module may query the device J whether a current data storage operation (an example of the operation indication request) may be suspended, if a response of the device J is obtained, for example, the device J (specifically, a user of the device J) agrees to suspend the data storage operation (an example of the operation indication response), the storage control module may perform the data read/write operation according to the read/write instruction d, and continue to perform the data read/write operation for the device J after the data read/write operation is completed.

It should be understood that, the device J above may be a wireless peripheral device (for example, the second wireless peripheral device, or the third wireless peripheral device), or may be a contact peripheral device (for example, the second contact user equipment, or the third contact user equipment).

It should be understood that, the operation indication request, the operation indication response, and the corresponding operations listed above are only exemplary descriptions, and the present invention is not limited thereto.

In this way, by using the foregoing logic switching method and process, a read/write error caused by simultaneous data reading/writing of multiple peripheral devices can be avoided, thereby further improving the reliability of the wireless expansion card 100 of the present invention. Moreover, through interaction with the peripheral device performing the data reading/writing, an operation can be performed according to a user instruction, thereby improving humanization performance of the wireless expansion card 100 of the present invention, and further improving the user experience.

It should be understood that, the logic switching methods and processes listed above are only exemplary descriptions, and the present invention is not limited thereto. For example, interaction may further be performed with the peripheral device sending a read/write instruction subsequently.

It should be understood that, in the embodiment of the present invention, power supplying time and data reading/writing time of the same peripheral device may be inconsistent. That is, the memory card performs data reading/writing for only one peripheral device in one time period. However, another peripheral device may supply power to the memory card in the time period. Moreover, the foregoing listed time periods for performing the data reading/writing, including the first time period and the second time period, may be continuous and may also be discontinuous, which is not specifically limited in the present invention. For example, during the logic switching, a time period of the suspended data reading/writing includes data reading/writing time before the suspension and data reading/writing time after the suspension; moreover, the suspension may occur many times, which is not specifically limited in the present invention.

It should be understood that, for ease of understanding and distinguishing, the third contact peripheral device, the second contact peripheral device and the first contact peripheral device are distinguished from each other; however, for example, when the first time period overlaps the second time period, the first contact peripheral device and the first contact peripheral device may be the same peripheral device, and likewise, the third contact peripheral device and the first contact peripheral device may also be the same peripheral device, the third contact peripheral device and the second contact peripheral device may also be the same peripheral device, the first wireless peripheral device and the second wireless peripheral device may also be the same peripheral device, the first wireless peripheral device and the third wireless peripheral device may also be the same peripheral device, and the second wireless peripheral device and the third wireless peripheral device may also be the same peripheral device.

Because data of the wireless communications module and the contact communications module are stored in the same storage control module, for the same storage space, in different time periods, the wireless expansion card according to the embodiment of the present invention can be used for data reading/writing of the novel intelligent terminal and the conventional intelligent terminal, and can implement data exchange between the novel intelligent terminal and the conventional intelligent terminal, thereby being capable of improving the user experience.

The functions and structure of the wireless expansion card according to the embodiment of the present invention are described in detail with reference to FIG. 1 to FIG. 3 above, and a method for data storage according to an embodiment of the present invention is described in detail with reference to FIG. 4 in the following. FIG. 4 is a schematic flowchart of a method for data storage 200 according to an embodiment of the present invention. As shown in FIG. 4, the method 200 includes:

S210: In a first time period, receive contact power supply of a first contact user equipment, so as to obtain first electric power.

S220: In the first time period, use the first electric power to perform first contact communication with the first contact user equipment, so as to transmit a first read/write instruction and first data that needs to be read or written according to the first read/write instruction.

S230: Use the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

Optionally, the first data is data that needs to be read from or written into the first wireless peripheral device by the first contact user equipment, and
the performing first contact communication with the first contact user equipment includes:
receiving the first read/write instruction sent by the first contact user equipment;
the performing first wireless communication with a first wireless peripheral device includes:
   sending the first data read/write instruction to the first wireless peripheral device.

Optionally, before the performing first wireless communication with a first wireless peripheral device, the method further includes:
in the first time period, using the first electric power to provide wireless power supply for the first wireless peripheral device.

Optionally, the first data is data that needs to be read from or written into the first contact user equipment by the first wireless peripheral device, and
the performing first wireless communication with a first wireless peripheral device includes:
receiving the first read/write instruction sent by the first wireless peripheral device;
the performing first contact communication with the first contact user equipment includes:
sending the first data read/write instruction to the first contact user equipment.

Optionally, the method further includes:
in a second time period, receiving contact power supply of a second contact user equipment, so as to obtain second electric power;
in the second time period, using the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and
in the second time period, using the second electric power, to read the second data from or write the second data into a storage medium according to the second read/write instruction.

Optionally, if a third read/write instruction from a peripheral device other than the second wireless peripheral device is received before data reading/writing corresponding to the second read/write instruction is completed, the reading the second data from or writing the second data into a storage medium according to the second read/write instruction includes:
performing data reading/writing according to the third read/write instruction after the data reading/writing corresponding to the second read/write instruction is completed; or
suspending the data reading/writing corresponding to the second read/write instruction, and after data reading/writing corresponding to the third read/write instruction is completed, continuing the data reading/writing corresponding to the second read/write instruction; or
canceling the data reading/writing corresponding to the second read/write instruction, and performing data reading/writing according to the third read/write instruction; or
sending a first operation indication request to the second wireless peripheral device, receiving a first operation indication response sent by the second wireless peripheral device, and performing data reading/writing according to the first operation indication response.

Optionally, the method further includes:
in a third time period, receiving wireless power supply of a third wireless peripheral device, so as to obtain third electric power;
in the third time period, using the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and
in the third time period, using the third electric power, to read the third data from or write the third data into a storage medium according to the fourth read/write instruction.

Optionally, if a fifth read/write instruction from a peripheral device other than the third wireless peripheral device is received before data reading/writing corresponding to the fourth read/write instruction is completed, the reading the third data from or writing the third data into a storage medium according to the fourth read/write instruction includes:
performing data reading/writing according to the fifth read/write instruction after the data reading/writing corresponding to the fourth read/write instruction is completed; or
suspending the data reading/writing corresponding to the fourth read/write instruction, and after data reading/writing corresponding to the fifth read/write instruction is completed, continuing the data reading/writing corresponding to the fourth read/write instruction; or
canceling the data reading/writing corresponding to the fourth read/write instruction, and performing data reading/writing according to the fifth read/write instruction; or
sending a second operation indication request to the third wireless peripheral device, receiving a second operation indication response sent by the third wireless peripheral device, and performing data reading/writing according to the second operation indication response.

Optionally, the method further includes:
in a fourth time period, receiving contact power supply of a third contact user equipment, so as to obtain fourth electric power;
in the fourth time period, using the fourth electric power to perform second contact communication with the third contact peripheral device, so as to transmit a sixth read/write instruction that is from the third contact peripheral device and fourth data that needs to be read or written according to the sixth read/write instruction; and
in the fourth time period, using the fourth electric power, to read the fourth data from or write the fourth data into a storage medium according to the sixth read/write instruction.

Optionally, if a seventh read/write instruction from a peripheral device other than the third wireless peripheral device is received before data reading/writing corresponding to the sixth read/write instruction is completed, the reading the fourth data from or writing the fourth data into a storage medium according to the sixth read/write instruction includes:
performing data reading/writing according to the seventh read/write instruction after the data reading/writing corresponding to the sixth read/write instruction is completed; or
suspending the data reading/writing corresponding to the sixth read/write instruction, and after data reading/writing corresponding to the seventh read/write instruction is completed, continuing the data reading/writing corresponding to the sixth read/write instruction; or
canceling the data reading/writing corresponding to the sixth read/write instruction, and performing data reading/writing according to the seventh read/write instruction; or
sending a third operation indication request to the third contact peripheral device, receiving a third operation indication response sent by the third contact peripheral device, and performing data reading/writing according to the third operation indication response.

An entity for performing the method for data storage 200 according to the embodiment of the present invention may be corresponding to the wireless expansion card in the method according to the embodiment of the present invention; moreover, the units, that is, modules, used in the method for data storage 200 and other operations and/or functions described above are implemented by corresponding modules of the wireless memory card 100 in FIG. 1, and for simplicity, details are not repeated herein.

According to the method for data storage in the embodiment of the present invention, because the wireless expansion card has a wireless communications module and a contact communications module, the wireless expansion card performs contact communication with a conventional intelligent terminal by using the contact communications module, communicates, by using the wireless communications module, with a novel intelligent terminal or a novel memory card that reads/writes data by using ultra-wideband impulse radio, and performs conversion between different protocols on data and signaling between the wireless communications module and the contact communications module, the wireless expansion card can implement data reading/writing between the conventional intelligent terminal and the novel intelligent terminal or novel memory card, so that an application range of the novel intelligent terminal or the novel memory card can be expanded, promotion and popularization of the ultra-wideband impulse radio transmission technology can be accelerated, and user experience of the conventional intelligent terminal can be improved.

It should be understood that, the term "and/or" in this text only describes an association relationship of associated objects, and indicates that three relationships may exist, for example, A and/or B may indicate three situations: A exists alone, A and B coexist, and B exists alone. In addition, the character "/" in this text generally represents that associated objects in front and behind are in an "or" relationship.

It should be understood that, in various embodiments of the present invention, values of the serial numbers of the processes do not mean a sequence of execution, and the sequence for executing the processes should be determined according to functions and internal logic thereof, and should not limit the implementation processes of the embodiments of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: various media that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A wireless expansion card, comprising:
a contact power receiving module, configured to: in a first time period, receive contact power supply of a first contact user equipment, so as to obtain first electric power;
a contact communications module, electrically connected to the contact power receiving module, and configured to: in the first time period, use the first electric power to perform first contact communication with the first contact user equipment, so as to transmit a first read/write instruction and first data that needs to be read or written according to the first read/write instruction; and
a wireless communications module, electrically connected to the contact power receiving module, in communication connection with the contact communications module, and configured to: in the first time period, use the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

2. The wireless expansion card according to claim 1, wherein the first data is data that needs to be read from or written into the first wireless peripheral device by the first contact user equipment, and
the contact communications module is specifically configured to receive the first read/write instruction sent by the first contact user equipment, and transmit the first data read/write instruction to the wireless communications module; and
the wireless communications module is specifically configured to obtain the first data read/write instruction from the contact communications module, and send the first data read/write instruction to the first wireless peripheral device.

3. The wireless expansion card according to claim 2, wherein the wireless expansion card further comprises:
a wireless power supply module, electrically connected to the contact power receiving module, and configured to: in the first time period, use the first electric power to provide wireless power supply for the first wireless peripheral device.

4. The wireless expansion card according to claim 1, wherein the first data is data that needs to be read from or written into the first contact user equipment by the first wireless peripheral device, and
the wireless communications module is specifically configured to receive the first read/write instruction sent by the first wireless peripheral device, and transmit the first data read/write instruction to the contact communications module; and
the contact communications module is specifically configured to obtain the first read/write instruction from the wireless communications module, and send the first data read/write instruction to the first contact user equipment.

5. The wireless expansion card according to any one of claims 1 to 4, wherein the wireless expansion card further comprises:
a storage control module having a storage medium, electrically connected to the contact power receiving module, in communication connection with the contact communications module and the wireless communications module, and configured to read data from or write data into the storage medium.

6. The wireless expansion card according to claim 5, wherein
the contact power receiving module is further configured to: in a second time period, receive contact power supply of a second contact user equipment, so as to obtain second electric power;
the wireless communications module is further configured to: in the second time period, use the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and
the storage control module is specifically configured to: in the second time period, use the second electric power, to read the second data from or write the second data into the storage medium according to the second read/write instruction.

7. The memory card according to claim 6, wherein the storage control module is further configured to: when a third read/write instruction from a peripheral device other than the second wireless peripheral device is received before data reading/writing corresponding to the second read/write instruction is completed,
perform data reading/writing according to the third read/write instruction after the data reading/writing corresponding to the second read/write instruction is completed; or
suspend the data reading/writing corresponding to the second read/write instruction, and after data reading/writing corresponding to the third read/write instruction is completed, continue the data reading/writing corresponding to the second read/write instruction; or
cancel the data reading/writing corresponding to the second read/write instruction, and perform data reading/writing according to the third read/write instruction; or
send a first operation indication request to the second wireless peripheral device, receive a first operation indication response sent by the second wireless peripheral device, and perform data reading/writing according to the first operation indication response.

8. The wireless expansion card according to any one of claims 5 to 7, wherein the wireless expansion card further comprises:
a wireless powered module, electrically connected to the wireless communications module and the storage control module, and configured to: in a third time period, receive wireless power supply of a third wireless peripheral device, so as to obtain third electric power; and
the wireless communications module is further configured to: in the third time period, use the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and
the storage control module is specifically configured to: in the third time period, use the third electric power, to read the third data from or write the third data into the storage medium according to the fourth read/write instruction.

9. The memory card according to claim 8, wherein the storage control module is further configured to: when a fifth read/write instruction from a peripheral device other than the third wireless peripheral device is received before data reading/writing corresponding to the fourth read/write instruction is completed,
perform data reading/writing according to the fifth read/write instruction after the data reading/writing corresponding to the fourth read/write instruction is completed; or
suspend the data reading/writing corresponding to the fourth read/write instruction, and after data reading/writing corresponding to the fifth read/write instruction is completed, continue the data reading/writing corresponding to the fourth read/write instruction; or
cancel the data reading/writing corresponding to the fourth read/write instruction, and perform data reading/writing according to the fifth read/write instruction; or
send a second operation indication request to the third wireless peripheral device, receive a second operation indication response sent by the third wireless peripheral device, and perform data reading/writing according to the second operation indication response.

10. The wireless expansion card according to any one of claims 5 to 9, wherein
the contact power receiving module is further configured to: in a fourth time period, receive contact power supply of a third contact user equipment, so as to obtain fourth electric power;
the contact communications module is further configured to: in the fourth time period, use the fourth electric power to perform second contact communication with the third contact peripheral device, so as to transmit a sixth read/write instruction that is from the third contact peripheral device and fourth data that needs to be read or written according to the sixth read/write instruction; and
the storage control module is specifically configured to: in the fourth time period, use the fourth electric power, to read the fourth data from or write the fourth data into the storage medium according to the sixth read/write instruction.

11. The memory card according to claim 10, wherein the storage control module is further configured to: when a seventh read/write instruction from a peripheral device other than the third contact user equipment is received before data reading/writing corresponding to the sixth read/write instruction is completed,
perform data reading/writing according to the seventh read/write instruction after the data reading/writing corresponding to the sixth read/write instruction is completed; or
suspend the data reading/writing corresponding to the sixth read/write instruction, and after data reading/writing corresponding to the seventh read/write instruction is completed, continue the data reading/writing corresponding to the sixth read/write instruction; or
cancel the data reading/writing corresponding to the sixth read/write instruction, and perform data reading/writing according to the seventh read/write instruction; or
send a third operation indication request to the third contact peripheral device, receive a third operation indication response sent by the third contact peripheral device, and perform data reading/writing according to the third operation indication response.

12. The wireless expansion card according to any one of claims 1 to 11, wherein the contact power receiving module and the contact communications module can be connected to the contact user equipment through at least one interface, and the at least one interface comprises:
a secure digital SD card interface, a compact flash CF card interface, a multimedia card MMC interface, a universal serial bus USB interface, a 1394 interface, a subscriber identity module SIM card interface, a user identity module UIM card interface, and a universal subscriber identity USIM card interface.

13. A method for data storage, comprising:
in a first time period, receiving contact power supply of a first contact user equipment, so as to obtain first electric power;
in the first time period, using the first electric power to perform first contact communication with the first contact user equipment, so as to transmit a first read/write instruction and first data that needs to be read or written according to the first read/write instruction; and
in the first time period, using the first electric power, to perform first wireless communication with a first wireless peripheral device by using ultra-wideband impulse radio, so as to transmit the first read/write instruction and the first data, so that data storing is performed between the first contact user equipment and the first wireless peripheral device.

14. The method for data storage according to claim 13, wherein the first data is data that needs to be read from or written into the first wireless peripheral device by the first contact user equipment, and
the performing first contact communication with the first contact user equipment comprises:
receiving the first read/write instruction sent by the first contact user equipment; and
the performing first wireless communication with a first wireless peripheral device comprises:
sending the first data read/write instruction to the first wireless peripheral device.

15. The method for data storage according to claim 14, wherein before the performing first wireless communication with a first wireless peripheral device, the method further comprises:
in the first time period, using the first electric power to provide wireless power supply for the first wireless peripheral device.

16. The method for data storage according to claim 13, wherein the first data is data that needs to be read from or written into the first contact user equipment by the first wireless peripheral device, and
the performing first wireless communication with a first wireless peripheral device comprises:
receiving the first read/write instruction sent by the first wireless peripheral device; and
the performing first contact communication with the first contact user equipment comprises:
sending the first data read/write instruction to the first contact user equipment.

17. The method for data storage according to any one of claims 13 to 16, wherein the method further comprises:
in a second time period, receiving contact power supply of a second contact user equipment, so as to obtain second electric power;
in the second time period, using the second electric power, to perform second wireless communication with a second wireless peripheral device by using ultra-wideband impulse radio, so as to transmit a second read/write instruction that is from the second wireless peripheral device and second data that needs to be read or written according to the second read/write instruction; and
in the second time period, using the second electric power, to read the second data from or write the second data into a storage medium according to the second read/write instruction.

18. The method for data storage according to claim 17, wherein if a third read/write instruction from a peripheral device other than the second wireless peripheral device is received before data reading/writing corresponding to the second read/write instruction is completed, the reading the second data from or writing the second data into a storage medium according to the second read/write instruction comprises:
performing data reading/writing according to the third read/write instruction after the data reading/writing corresponding to the second read/write instruction is completed; or
suspending the data reading/writing corresponding to the second read/write instruction, and after data reading/writing corresponding to the third read/write instruction is completed, continuing the data reading/writing corresponding to the second read/write instruction; or
canceling the data reading/writing corresponding to the second read/write instruction, and performing data reading/writing according to the third read/write instruction; or
sending a first operation indication request to the second wireless peripheral device, receiving a first operation indication response sent by the second wireless peripheral device, and performing data reading/writing according to the first operation indication response.

19. The method for data storage according to any one of claims 13 to 18, wherein the method further comprises:
in a third time period, receiving wireless power supply of a third wireless peripheral device, so as to obtain third electric power;
in the third time period, using the third electric power, to perform third wireless communication with the third wireless peripheral device by using ultra-wideband impulse radio, so as to transmit a fourth read/write instruction that is from the third wireless peripheral device and third data that needs to be read or written according to the fourth read/write instruction; and
in the third time period, using the third electric power, to read the third data from or write the third data into the storage medium according to the fourth read/write instruction.

20. The method for data storage according to claim 19, wherein if a fifth read/write instruction from a peripheral device other than the third wireless peripheral device is received before data reading/writing corresponding to the fourth read/write instruction is completed, the reading the third data from or writing the third data into the storage medium according to the fourth read/write instruction comprises:
performing data reading/writing according to the fifth read/write instruction after the data reading/writing corresponding to the fourth read/write instruction is completed; or
suspending the data reading/writing corresponding to the fourth read/write instruction, and after data reading/writing corresponding to the fifth read/write instruction is completed, continuing the data reading/writing corresponding to the fourth read/write instruction; or
canceling the data reading/writing corresponding to the fourth read/write instruction, and performing data reading/writing according to the fifth read/write instruction; or
sending a second operation indication request to the third wireless peripheral device, receiving a second operation indication response sent by the third wireless peripheral device, and performing data reading/writing according to the second operation indication response.

21. The method for data storage according to any one of claims 13 to 20, wherein the method further comprises:
in a fourth time period, receiving contact power supply of a third contact user equipment, so as to obtain fourth electric power;
in the fourth time period, using the fourth electric power to perform second contact communication with the third contact peripheral device, so as to transmit a sixth read/write instruction that is from the third contact peripheral device and fourth data that needs to be read or written according to the sixth read/write instruction; and
in the fourth time period, using the fourth electric power, to read the fourth data from or write the fourth data into the storage medium according to the sixth read/write instruction.

22. The method for data storage according to claim 21, wherein if a seventh read/write instruction from a peripheral device other than the third contact user equipment is received before data reading/writing corresponding to the sixth read/write instruction is completed, the reading the fourth data from or writing the fourth data into the storage medium according to the sixth read/write instruction comprises:
performing data reading/writing according to the seventh read/write instruction after the data reading/writing corresponding to the sixth read/write instruction is completed; or
suspending the data reading/writing corresponding to the sixth read/write instruction, and after data reading/writing corresponding to the seventh read/write instruction is completed, continuing the data reading/writing corresponding to the sixth read/write instruction; or
canceling the data reading/writing corresponding to the sixth read/write instruction, and performing data reading/writing according to the seventh read/write instruction; or
sending a third operation indication request to the third contact peripheral device, receiving a third operation indication response sent by the third contact peripheral device, and performing data reading/writing according to the third operation indication response.
